# EUROPEAN PATENT SPECIFICATION

(11) **EP 4 191 746 B1**
(45) Date of publication and mention of the grant of the patent: **28.08.2024**
(21) Application number: 22211739.2
(22) Date of filing: 06.12.2022
(51) Int. Cl.: H01M 10/48, H01M 50/20, H01M 50/213, H01M 50/244

(54) **BATTERY PACK**
BATTERIEPACK
BLOC-BATTERIE

(30) Priority: 06.12.2021 CN 202111477495
(43) Date of publication of application: 07.06.2023
(73) Proprietor: Techtronic Cordless GP, Anderson, SC 29621 (US)
(72) Inventor: LIU, Ya Bin, Dongguan City (CN); ZHAO, Jiang, Dongguan City (CN); ZHAO, Jian Guo, Dongguan City (CN); WANG, Ren Jie, Dongguan City (CN)
(74) Representative: Novagraaf Group

(56) References cited:
- DE-T2- 3 875 641
- US-A1- 2017 250 395

## Description

### Technical Field

The present invention relates to an electric energy storage device, in particular to a battery pack.

### Background Art

A battery pack is usually used as an energy supply device when no fixed power supply is available or it is inconvenient to provide direct power supply, for example, in a household cleaning device, a kitchen appliance, or a medical device, which needs to be moved frequently. A battery pack often has the problem of reaching an excessively high temperature during charging or discharging. An excessively high temperature may shorten the battery life, even causing the danger of combustion or explosion. As a precautionary measure, a battery pack is usually provided with a controller and a temperature sensor that allow the current to be cut off when the battery pack temperature exceeds a pre-set threshold, thereby protecting the battery pack. Therefore, how to arrange temperature sensors compactly and effectively is a problem to be solved in battery pack design.

US 2017/250395 A1 describes a battery pack, comprising a plurality of battery cells and a temperature sensing block attached to a flexible sheet, wherein a battery holder is provided with a through mounting slot.

### Summary of the Invention

An objective of the present invention is to provide a battery pack, in which temperature sensors for measuring temperatures may be compactly arranged to allow easy manufacture and assembly, and ensure effective and accurate measurement of temperatures of the battery pack.

In one embodiment, the battery pack comprises:
a plurality of individual batteries;
a battery holder for fixing the individual batteries;
a circuit board electrically connected to the batteries and mounted on the battery holder; and
a temperature sensor electrically connected to the circuit board and comprising a flexible sheet and a temperature sensing block attached to the flexible sheet, the temperature sensing block being thicker than the flexible sheet, wherein the battery holder is provided with a through mounting slot and is provided with a concave yielding slot on the side facing the batteries, the temperature sensor can pass through the mounting slot and be fixed by the battery holder and the batteries, and the temperature sensing block is accommodated in the yielding slot and in close contact with the batteries.

According to the solution, the temperature sensing block is accommodated in the yielding slot, so that although the temperature sensing block is thicker, the battery holder remains in close contact with the batteries to tightly clamp the temperature sensor, and the battery holder is pressed against the flexible sheet and further transmits the pressing force to the temperature sensing block by the flexible sheet, which allows the temperature sensing block to come into close contact with the batteries, so as to improve the accuracy of temperature measurement. In addition, the mounting slot passing through the battery holder facilitates the introduction of a temperature sensor from the circuit board to the space between the battery holder and the batteries, which makes it easy to mount a temperature sensor.

In one embodiment, the yielding slot passes through the battery holder.

According to the solution, the yielding slot is structured as passing through the battery holder, which makes it possible to fit temperature sensing blocks having different thicknesses, and eliminates the need to consider the depth of the slot during manufacturing, thus simplifying the manufacturing process.

In one embodiment, the depth of the yielding slot is approximately equal to the thickness of the temperature sensing block.

According to the solution, the temperature sensing block may better fit the yielding slot, which is conducive to forming a compact structure.

In one embodiment, a chamfer is arranged on the side of the mounting slot transverse to the direction of insertion of the temperature sensor.

According to the solution, a chamfer may be arranged to increase the operating space for mounting a temperature sensor, which makes it convenient for the temperature sensor to be inserted into and pass through the mounting slot.

In one embodiment, the yielding slot is in communication with the mounting slot.

According to the solution, when a temperature sensor is mounted, a part of the temperature sensing block, which is thicker, can pass through the yielding slot, so that the width of the mounting slot may be set to be just suitable for a thin flexible sheet to pass through the mounting slot, without the need to consider the thickness of the temperature sensing block, which allows a reduction in the slot size to prevent a decrease in the structural strength of the battery holder due to an excessive slot size.

In one embodiment, the flexible sheet is wrapped around the batteries at least partially along the circumference of the batteries.

According to the solution, a strip structure is wrapped around a battery horizontally, which increases the area of contact with the battery, thus promoting the heat transfer from the battery to improve the sensitivity in responding to a battery temperature.

In one embodiment, adapter slots are provided on the side of the battery holder facing the batteries, the adapter slots fitting the shapes of the batteries to accommodate the batteries, wherein the size of the adapter slot corresponding to the temperature sensor perpendicular to the axial direction of the batteries is larger than the size of another adapter slot perpendicular to the axial direction of the batteries.

According to the solution, with an adapter slot, a battery may be clamped and fixed more securely, and a large adapter slot allows a temperature sensor to be mounted accurately while the fit between another adapter slot and the battery remains unaffected.

In one embodiment, the mounting slot is arranged at the end of the adapter slot along the axial direction of the batteries.

According to the solution, a temperature sensor may be mounted more conveniently.

In one embodiment, the flexible sheet is made of a material that is thermally conductive and has a specific support strength. Preferably, an electrically conductive material may be embedded in the flexible sheet.

According to the solution, a flexible sheet can conduct heat between a battery and a temperature sensing portion, and increase the area of contact with a battery, thus improving the sensitivity in responding to a battery temperature; alternatively, a flexible sheet can transmit electrical signals between a temperature sensing portion and a lead wire that connects the temperature sensor to the circuit board, thus facilitating mounting and improving the product reliability.

In one embodiment, the temperature sensor is a thermistor.

According to the solution, a thermistor highly sensitive to temperature response reacts in a timely manner when the battery temperature exceeds a threshold.

In one embodiment, it further comprises a housing assembly, the housing assembly comprising a base and a top cover, the top cover being connected to the base to form a closed accommodating space, the battery holder being located in the accommodating space and connected to the base.

According to the solution, the housing assembly forms a closed accommodating space, and the core components of the battery pack, such as the batteries and the circuit board, are arranged in the accommodating space and isolated from the outside to provide a favourable operating environment, so that these core components remain unaffected by any adverse effects of dust, water, etc., which is conducive to extending the service life.

In one embodiment, the top cover and the base are connected and fixed by ultrasonic welding at the edge where they clasp.

According to the solution, by ultrasonic welding, the accommodating space may be sealed without sealing elements, which is simple and convenient while saving materials.

In one embodiment, the battery pack further comprises:
an electrical terminal electrically connected to the circuit board; and
a latch structure capable of removably engaging the battery pack with an electric device and/or a charging device, wherein, in an engagement state, the electric device and/or the charging device are electrically connected to the electric terminal.

According to the solution, with the latch structure, the battery pack remains securely connected to the corresponding device when the battery pack is supplying power or being charged.

### Brief Description of the Drawings

In order to gain a better understanding of the above-described and other objectives, features, advantages and functions of the present invention, reference may be made to the preferred embodiments shown in the drawings. In the drawings, identical reference numerals denote identical components. It is readily comprehensible to those skilled in the art that the drawings are intended to schematically illustrate preferred embodiments of the present invention, and that the components in the drawings are not drawn to scale.
Fig. 1 is a perspective view of a battery pack according to a preferred embodiment of the present invention;
Fig. 2 is a stereoscopic exploded view of the battery pack shown in Fig. 1;
Fig. 3 is a perspective view of the battery holder of the battery pack shown in Fig. 1;
Fig. 4 is a perspective view of a temperature sensor of the battery pack shown in Fig. 1;
Fig. 5 is a vertical sectional view taken along line A-A in Fig. 1; and
Fig. 6 is a locally enlarged schematic diagram of the interior of area B in Fig. 1.

### Key to reference numerals:

- 1: Battery pack
- 10: Housing assembly
- 11: Top cover
- 111: Boss portion
- 12: Base
- 13: Battery holder
- 131: Adapter slot
- 132: Mounting slot
- 133: Yielding slot
- 134: Chamfer
- 20: Battery
- 30: Circuit board
- 31: Electrical terminal
- 32: Sealing ring
- 33: Fastener
- 34: Jack
- 35: Electrically conductive sheet
- 40: Temperature sensor
- 41: Temperature sensing block
- 42: Flexible sheet
- 43: Lead wire
- 50: Latch structure

### Specific Embodiments

Specific embodiments of the present invention will be described in detail below in conjunction with the drawings. What are described herein are only preferred embodiments of the present invention, and those skilled in the art can come up with other means of realising the present invention on the basis of the described preferred embodiments.

The present invention provides a battery pack for providing electric energy for an electric device, for example, a household cleaning device, a kitchen appliance, or a medical device. A battery pack according to the present invention will be described in detail below with reference to the drawings.

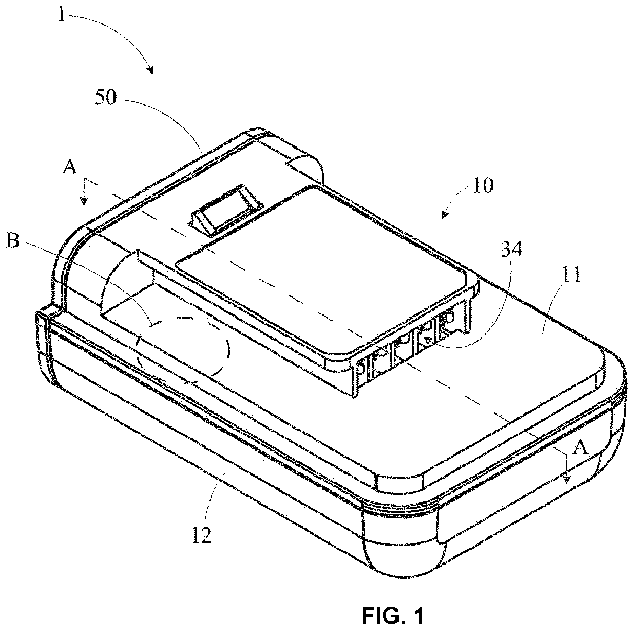

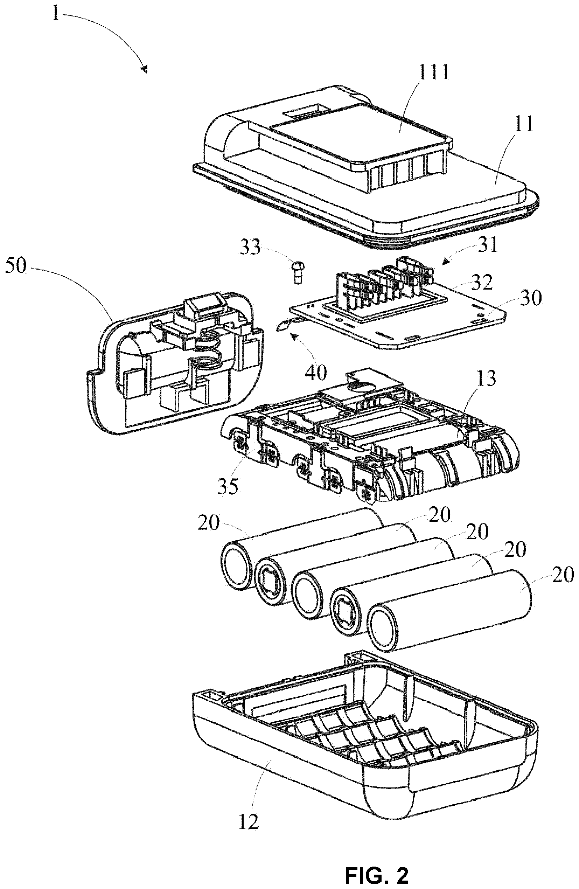

As shown in Fig. 1 and Fig. 2, the battery pack 1 according to a preferred embodiment comprises a housing assembly 10, a plurality of individual batteries 20, and a circuit board 30. The housing assembly 10 forms an accommodating space in which a plurality of individual batteries 20 may be arranged in a desired specific manner. The circuit board 30 is also arranged in the accommodating space and electrically connected to a plurality of individual batteries 20. Further, the circuit board 30 is provided with a plurality of electrical terminals 31. The battery pack 1 may be electrically connected to an electric device via the electrical terminal 31, so as to realize the functions of powering and communicating with the electric device. When the battery 20 is a rechargeable battery, the battery pack 1 may also be electrically connected to a charging device via the electrical terminal 31, so as to realize the functions of charging and communicating with the charging device.

A latch structure 50 is arranged outside the battery pack 1. The latch structure 50 is arranged to be capable of removably engaging the battery pack 1 with an electric device and/or a charging device, so that the battery pack 1 remains fixed relative to the electric device and/or the charging device. In an engagement state, the battery pack 1 may be electrically connected to an electric device and/or a charging device via the electrical terminal 31 to achieve stable power supply or charging. When provision of power supply or charging is completed, the latch structure 50 may be actuated to release the engagement and remove the battery pack 1 from the electric device and/or the charging device, while the electrical connection is broken.

Referring further to Fig. 2, the housing assembly 10 comprises a top cover 11, a base 12, and a battery holder 13. The top cover 11 and the base 12 engage and are connected, forming the above-described accommodating space therebetween. It is comprehensible that since the battery 20, the circuit board 30, and the connection circuit, which is not shown, in the battery pack 1 are sensitive to water, dust, etc., the accommodating space formed by the top cover 11 and the base 12 is sealed off from the outside to provide a sealed environment. In a preferred embodiment, the top cover 11 and the base 12 may be connected and fixed by ultrasonic welding at the edge where they clasp, so that the accommodating space is completely isolated from the outside. This is highly beneficial when the battery pack 1 is used in a highly humid or dusty environment.

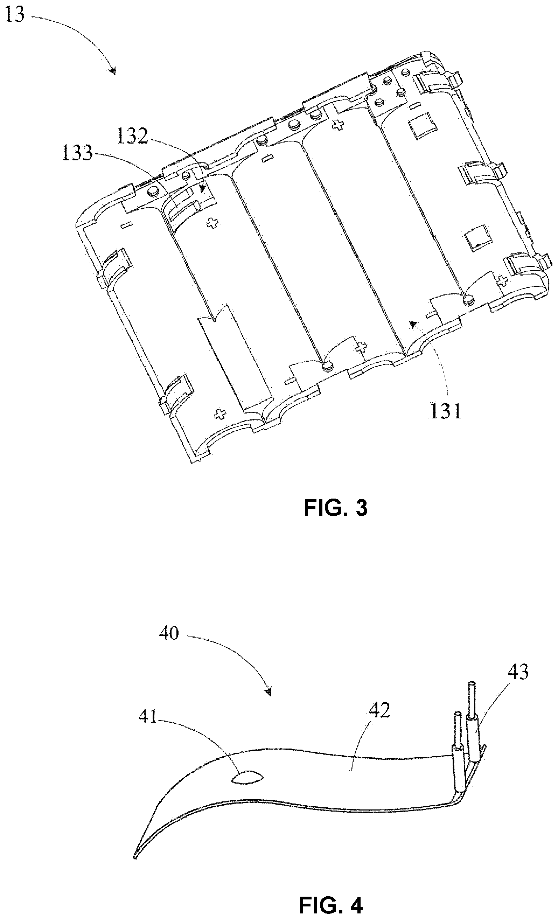

The battery holder 13 is arranged in an accommodating space formed by the top cover 11 and the base 12, and is connected to the base 12. In one embodiment, the battery holder 13 and the base 12 are provided with a snap-on feature portion, such as a hook and a slot, which are snapped into a fixed connection, so as to fix a battery therebetween. In addition, the two opposite sides of the battery holder 13 are provided with side walls extending axially perpendicular to the batteries 20, wherein the spacing between the two side walls is approximately equal to the axial length of the batteries 20 for axial fixation of the batteries 20. In the drawings, five cylindrical individual batteries 20 are shown for illustration. The five individual batteries 20 are juxtaposed into one layer parallel to the longitudinal axis, and are clamped and fixed by the battery holder 13 and the base 12 from both sides. In order to fix the batteries 20 more securely, the base 12 and the battery holder 13 are respectively provided with adapter slots on the side facing each individual battery 20, wherein, for example, five adapter slots are respectively provided for five cylindrical individual batteries, each adapter slot having a concave shape fitting the individual battery 20. Fig. 3 shows the side of the battery holder 13 facing the battery, wherein the adapter slot 131 has a fan-shaped section perpendicular to the longitudinal direction of the battery 20, so as to better fit the side of the battery 20.

Preferably, a buffer pad (not shown) is arranged between the battery holder 13 and the battery 20 and/or between the base 12 and the battery 20. The buffer pad may be, for example, a rubber material, and may be shaped to fit the battery 20. The buffer pad can cushion the impact force exerted on the battery 20 when, for example, the battery pack 1 falls off. In addition, the buffer pad can also conduct heat, guiding and diffusing the heat generated by the battery 20 to the outside of the battery pack 1.

In another embodiment, the battery holder comprises an upper battery holder and a lower battery holder. Batteries are accommodated between the upper battery holder and the lower battery holder to form a battery assembly. The battery assembly is then fixedly accommodated in the housing. In this case, the buffer cushion may be arranged between the upper battery holder and the batteries and/or between the lower battery holder and the batteries.

It is readily comprehensible that in another embodiment, the shape, number, and arrangement of the batteries 20 may be flexibly set according to the actual situation, wherein, for example, the batteries 20 may be parallelepipedal, the quantity thereof is not limited to five, and/or the batteries may be arranged into two or more layers that are aligned with one another or are staggered. When the batteries 20 are arranged in two or more layers, a spacer may be arranged between layers, the spacer preferably having a structure similar to a side wall of the battery holder 13 as described above for axial fixation of the batteries 20.

The circuit board 30 is separated from the batteries 20 by the battery holder 13 in the accommodating space, and is electrically connected to all the batteries 20 through the electrically conductive sheet 35 mounted on the battery holder 13, so as to manage and control the charging and discharging of the batteries 20. In the illustrated embodiment, in addition to fixing the batteries 20, the battery holder 13 may preferably further be configured to fix the circuit board 30. As shown in Fig. 2, the circuit board 30 may be fixed by a standard fastener, for example, a screw 33, on the side of the battery holder 13 away from the batteries 20.

The electrical terminal 31 extends from the circuit board 30 towards the top cover 11. The top cover 11 is provided with a convex boss portion 111 at a position corresponding to the electrical terminal 31. A cavity is formed inside the boss portion 111 to accommodate the electrical terminal 31. The boss portion 111 opens on one side, exposing the electrical terminal 31 relative to the outside, so as to form a jack 34 electrically connectible to an electric device or a charging device. Further, the circuit board 30 is provided with a sealing ring 32 surrounding the electrical terminal 31. The side of the top cover 11 facing the circuit board 30 may be provided with a rib structure (not shown) surrounding the cavity. When the top cover 11 is connected to the base 12, the rib structure is tightly pressed on the sealing ring 32, so that the accommodating space where the circuit board 30 is located is sealed off from the outside.

As shown in Fig. 2, the battery pack 1 further comprises a temperature sensor 40. The temperature sensor 40 may be used to sense the temperature of the batteries 20, and the circuit board 30 can control the batteries 20 on the basis of a sensed temperature, wherein once the temperature of the batteries 20 exceeds a pre-set threshold, the battery current is cut off for protection. In one embodiment, the temperature sensor 40 may be a thermistor. Specifically, referring to Fig. 4, the temperature sensor 40 comprises a temperature sensing block 41, a flexible sheet 42, and a lead wire 43. The temperature sensing block 41 has the function of sensing a temperature, and usually has a small size. The temperature sensing block 41 may be arranged on the flexible sheet 42 by bonding, wrapping, and/or packaging, or the flexible sheet 42 may extend from the temperature sensing block 41 to surround the temperature sensing block 41. The flexible sheet is highly deformable, and the temperature sensing block 41 is thicker than the flexible sheet itself. The lead wire 43 is electrically connected to the circuit board 30 to transmit a temperature-related electrical signal generated by the temperature sensor 40 to the circuit board 30. The lead wire 43 may be directly led out from the temperature sensing block 41. Alternatively, an electrically conductive material may be embedded in the flexible sheet 42 so that the flexible sheet 42 becomes electrically conductive. In this case, the lead wire 43 may also be led out from the flexible sheet 42, and the flexible sheet 42 establishes an electrical connection between the lead wire 43 and the temperature sensing block 41.

In order for the temperature sensor 40 to be mounted compactly, as shown in Fig. 3, Fig. 5 and Fig. 6, the battery holder 13 is provided with a through mounting slot 132, the mounting slot 132 having a size just suitable for the entry of the temperature sensor 40. When the lead wire 43 of the temperature sensor 40 is electrically connected to the circuit board 30, the flexible sheet 42 and the temperature sensing block 41 can extend from the circuit board 30, pass through the mounting slot 132, and reach into the space between the battery holder 13 and the batteries 20. The mounting slot 132 may be arranged at one end of the adapter slot 131 of the battery holder 13, which makes it more convenient to mount the temperature sensor 40. Because of the flexibility of the flexible sheet 42, when the battery holder 13 engages the base 12, the temperature sensing block 41 and the flexible sheet 42 are in close contact with at least one of the batteries 20 to realize the temperature measurement function. In the illustrated embodiment, the flexible sheet 42 of the temperature sensor 40 is, on the whole, configured as a thin sheet and strip structure, which is arranged roughly transverse to the batteries 20, and is at least partially wrapped around the batteries 20 along the circumference of the batteries 20.

Further, the side of the battery holder 13 facing the batteries 20 near the mounting slot 132 is further provided with a concave yielding slot 133. When the temperature sensor 40 is mounted in place, the temperature sensing block 41, which is thicker, may be located in the yielding slot 133. With this arrangement, the flexible sheet 42 may be tightly pressed against the battery holder 13 at all other positions except where the yielding slot 133 is located to remain in close contact with the sides of the batteries 20, which prevents the batteries 20 and the flexible sheet 42 from loosening due to any gaps. The flexible sheet 42 further transmits the pressing force to the temperature sensing block 41 so that the temperature sensing block 41 remains in close contact with the batteries 20, which helps ensure the accuracy of temperature measurement. Preferably, the flexible sheet 42 may also be made of a material with high thermal conductivity, so that the flexible sheet 42 can transfer the heat generated by the batteries 20 to the temperature sensing block 41, further improving the accuracy and sensitivity of temperature measurement.

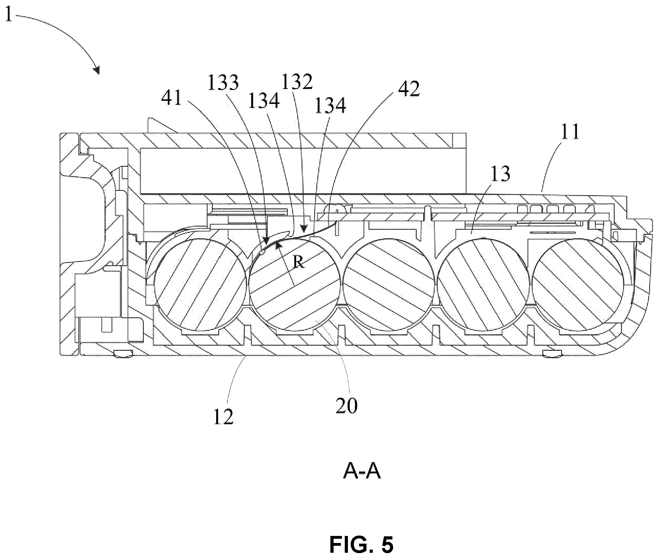

As shown in Fig. 5, it is comprehensible that although the yielding slot 133 is provided to yield to the temperature sensing block 41, since the flexible sheet 42 has a certain thickness, in order to facilitate the mounting and secure the batteries, the size of the adapter slot 131 corresponding to the temperature sensor 40 perpendicular to the axial direction of the batteries is larger than the size of another adapter slot perpendicular to the axial direction of the batteries in the battery holder 13. In this embodiment, taking, for example, a battery having a circular cross section, the size refers to the radial dimension R. The two sides of the mounting slot 132 transverse to the direction of insertion of the temperature sensor 40 are respectively provided with a chamfer 134. The chamfer 134 is arranged to increase the operating space for mounting the temperature sensor 40, so that the temperature sensor 40 may be inserted and passed through the mounting slot 132.

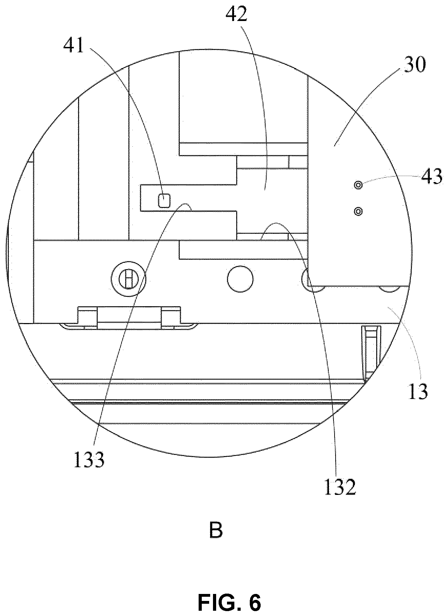

Preferably, the yielding slot 133 may be arranged to pass through the battery holder 13, so that the yielding slot 133 is applicable to temperature sensing blocks of different thicknesses, which makes the housing assembly 10 more widely applicable, and since the slot may be directly passed through without controlling the depth of the slot, manufacture is easy. Further, the yielding slot 133 may also be arranged to be in communication with the mounting slot 132. As shown in Fig. 3 and Fig. 6, the yielding slot 133 and the mounting slot 132 form a roughly T-shaped slot. Thus, when the flexible sheet 42 passes through the mounting slot 132, a part of the temperature sensing block 41, which is thicker, can pass through the yielding slot 133, so that the width of the mounting slot 132 may be reduced such that it is only suitable for the flexible sheet 42 to pass through the mounting slot, without the need to consider the thickness of the temperature sensing block 41, which prevents a decrease in the structural strength of the battery holder 13 due to an excessive slot size.

A battery pack according to the present invention has been described above. It is comprehensible that although the drawings show that the temperature sensor 40 is wrapped around only one battery 20, that is, to measure the temperature of one battery, the temperature sensor 40 may also have close contact with a plurality of batteries 20 at the same time to measure the temperature of the plurality of batteries simultaneously. Alternatively, a plurality of temperature sensors 40 may be arranged, and each temperature sensor 40 measures the temperature of one or more batteries 20.

The above description of various embodiments of the present invention is provided to a person skilled in the art for illustrative purposes. The present invention is not intended to be exclusive or limited to a single disclosed embodiment.

## Claims

1. Battery pack (1), **characterised in that** the battery pack comprises:
a plurality of individual batteries (20);
a battery holder (13) for fixing the individual batteries; a circuit board (30) electrically connected to the batteries and mounted on the battery holder; and
a temperature sensor (40) electrically connected to the circuit board and comprising a flexible sheet (42) and a temperature sensing block (41) attached to the flexible sheet, the temperature sensing block being thicker than the flexible sheet, wherein the battery holder is provided with a through mounting slot (132) and is provided with a concave yielding slot (133) on the side facing the batteries,
the temperature sensor can pass through the mounting slot and be fixed by the battery holder and the batteries, and the temperature sensing block is accommodated in the yielding slot and in close contact with the batteries.

2. Battery pack according to Claim 1, **characterised in that** the yielding slot passes through the battery holder.

3. Battery pack according to Claim 1, **characterised in that** the depth of the yielding slot is approximately equal to the thickness of the temperature sensing block.

4. Battery pack according to Claim 1, **characterised in that** a chamfer (134) is arranged on the side of the mounting slot transverse to the direction of insertion of the temperature sensor.

5. Battery pack according to any one of Claims 1 to 4, **characterised in that** the yielding slot is in communication with the mounting slot.

6. Battery pack according to Claim 1, **characterised in that** the flexible sheet is wrapped around the batteries at least partially along the circumference of the batteries.

7. Battery pack according to Claim 6, **characterised in that** adapter slots (131) are provided on the side of the battery holder facing the batteries, the adapter slots fitting the shapes of the batteries to accommodate the batteries, wherein the size of the adapter slot corresponding to the temperature sensor perpendicular to the axial direction of the batteries is larger than the size of another adapter slot perpendicular to the axial direction of the batteries.

8. Battery pack according to Claim 7, **characterised in that** the mounting slot is arranged at the end of the adapter slot along the axial direction of the batteries.

9. Battery pack according to Claim 1, **characterised in that** the flexible sheet is made of a thermally conductive material, and/or **in that** an electrically conductive material is embedded in the flexible sheet.

10. Battery pack according to Claim 1, **characterised in that** the temperature sensor is a thermistor.

11. Battery pack according to Claim 1, **characterised in that** it further comprises a housing assembly (10) , the housing assembly comprising a base (12) and a top cover (11), the top cover being connected to the base to form a closed accommodating space, the battery holder being located in the accommodating space and connected to the base.

12. Battery pack according to Claim 11, **characterised in that** the top cover and the base are connected and fixed by ultrasonic welding at the edge where they clasp.

13. Battery pack according to Claim 1, **characterised in that** the battery pack further comprises:
an electrical terminal (31) electrically connected to the circuit board; and
a latch structure (50) capable of removably engaging the battery pack with an electric device and/or a charging device, wherein, in an engagement state, the electric device and/or the charging device are electrically connected to the electric terminal.

## Patentansprüche

1. Akkupack (1),
**dadurch gekennzeichnet, dass** der Akkupack umfasst:
eine Vielzahl einzelner Akkus (20);
einen Akkuhalter (13) zum Fixieren der einzelnen Akkus;
eine Leiterplatte (30), die mit den Akkus elektrisch verbunden und auf dem Akkuhalter montiert ist; und
einen Temperatursensor (40), der mit der Leiterplatte elektrisch verbunden ist und eine flexible Folie (42) und einen Temperatursensorblock (41) umfasst, der an der flexiblen Folie angebracht ist, wobei der Temperatursensorblock dicker als die flexible Folie ist, wobei der Akkuhalter mit einem durchgehenden Montageschlitz (132) versehen ist und auf der Seite, die den Akkus zugewandt ist, mit einem konkaven nachgiebigen Schlitz (133) versehen ist, der Temperatursensor durch den Montageschlitz hindurchgehen und durch den Akkuhalter und die Akkus fixiert werden kann, und der Temperatursensorblock in dem nachgiebigen Schlitz und in engem Kontakt mit den Akkus aufgenommen ist.

2. Akkupack nach Anspruch 1, **dadurch gekennzeichnet, dass** der nachgiebige Schlitz durch den Akkuhalter hindurchgeht.

3. Akkupack nach Anspruch 1, **dadurch gekennzeichnet, dass** die Tiefe des nachgiebigen Schlitzes etwa gleich der Dicke des Temperatursensorblocks ist.

4. Akkupack nach Anspruch 1, **dadurch gekennzeichnet, dass** eine Fase (134) auf der Seite des Montageschlitzes quer zu der Einführrichtung des Temperatursensors angeordnet ist.

5. Akkupack nach einem der Ansprüche 1 bis 4,
**dadurch gekennzeichnet, dass** der nachgiebige Schlitz mit dem Montageschlitz in Verbindung steht.

6. Akkupack nach Anspruch 1, **dadurch gekennzeichnet, dass** die flexible Folie mindestens teilweise entlang des Umfangs der Akkus um die Akkus herum gewickelt ist.

7. Akkupack nach Anspruch 6, **dadurch gekennzeichnet, dass** Adapterschlitze (131) auf der Seite des Akkuhalters vorgesehen sind, die den Akkus zugewandt ist, wobei die Adapterschlitze zu den Formen der Akkus passen, um die Akkus aufzunehmen, wobei die Größe des Adapterschlitzes, der dem Temperatursensor entspricht, senkrecht zu der Achsrichtung der Akkus größer als die Größe eines anderen Adapterschlitzes senkrecht zu der Achsrichtung der Akkus ist.

8. Akkupack nach Anspruch 7, **dadurch gekennzeichnet, dass** der Montageschlitz an dem Ende des Adapterschlitzes entlang der Achsrichtung der Akkus angeordnet ist.

9. Akkupack nach Anspruch 1, **dadurch gekennzeichnet, dass** die flexible Folie aus einem thermisch leitfähigen Material besteht und/oder **dass** ein elektrisch leitfähiges Material in die flexible Folie eingebettet ist.

10. Akkupack nach Anspruch 1, **dadurch gekennzeichnet, dass** der Temperatursensor ein Thermistor ist.

11. Akkupack nach Anspruch 1, **dadurch gekennzeichnet, dass** er ferner eine Gehäuseanordnung (10) umfasst, die Gehäuseanordnung umfassend eine Basis (12) und eine obere Abdeckung (11), wobei die obere Abdeckung mit der Basis verbunden ist, um einen geschlossenen Aufnahmeraum auszubilden, wobei sich der Akkuhalter in dem Aufnahmeraum befindet und mit der Basis verbunden ist.

12. Akkupack nach Anspruch 11, **dadurch gekennzeichnet, dass** die obere Abdeckung und die Basis an der Kante, an der sie greifen, durch Ultraschallschweißen verbunden und fixiert sind.

13. Akkupack nach Anspruch 1, **dadurch gekennzeichnet, dass** der Akkupack ferner umfasst:
einen elektrischen Anschluss (31), der mit der Leiterplatte elektrisch verbunden ist; und
eine Verriegelungsstruktur (50), die in der Lage ist, den Akkupack mit einer elektrischen Vorrichtung und/oder einer Ladevorrichtung lösbar zu verbinden, wobei in einem Eingriffszustand die elektrische Vorrichtung und/oder die Ladevorrichtung mit dem elektrischen Anschluss elektrisch verbunden sind.

## Revendications

1. Bloc-batterie (1),
**caractérisé en ce que** le bloc-batterie comprend :
une pluralité de batteries individuelles (20) ;
un réceptacle à batteries (13) permettant de fixer les batteries individuelles ;
une carte de circuit (30) connectée électriquement aux batteries et montée sur le réceptacle à batteries ; et
un capteur de température (40) connecté électriquement à la carte de circuit et comprenant une feuille flexible (42) et un bloc de captage de température (41) attaché à la feuille flexible, le bloc de captage de température étant plus épais que la feuille flexible, dans lequel le réceptacle à batteries est pourvu d'une rainure de montage traversante (132) et est pourvu d'une rainure de déformation concave (133) sur le côté faisant face aux batteries, le capteur de température peut passer à travers la rainure de montage et être fixé par le réceptacle à batteries et les batteries, et le bloc de captage de température est reçu dans la rainure de déformation et en contact proche avec les batteries.

2. Bloc-batterie selon la revendication 1, **caractérisé en ce que** la rainure de déformation passe à travers le réceptacle à batteries.

3. Bloc-batterie selon la revendication 1, **caractérisé en ce que** la profondeur de la rainure de déformation est approximativement égale à l'épaisseur du bloc de captage de température.

4. Bloc-batterie selon la revendication 1, **caractérisé en ce qu'**un chanfrein (134) est agencé sur le côté de la rainure de montage transversal à la direction d'insertion du capteur de température.

5. Bloc-batterie selon l'une quelconque des revendications 1 à 4, **caractérisé en ce que** la rainure de déformation est en communication avec la rainure de montage.

6. Bloc-batterie selon la revendication 1, **caractérisé en ce que** la feuille flexible est enveloppée autour des batteries au moins partiellement le long de la circonférence des batteries.

7. Bloc-batterie selon la revendication 6, **caractérisé en ce que** des rainures d'adaptation (131) sont fournies sur le côté du réceptacle à batteries faisant face vers les batteries, les rainures d'adaptation s'ajustant aux formes des batteries pour recevoir les batteries, dans lequel la taille de la rainure d'adaptation correspondant au capteur de température perpendiculaire à la direction axiale des batteries est plus grande que la taille d'une autre rainure d'adaptation perpendiculaire à la direction axiale des batteries.

8. Bloc-batterie selon la revendication 7, **caractérisé en ce que** la rainure de montage est agencée au niveau de l'extrémité de la rainure d'adaptation le long de la direction axiale des batteries.

9. Bloc-batterie selon la revendication 1, **caractérisé en ce que** la feuille flexible est constituée d'un matériau thermoconducteur, et/ou **en ce qu'**un matériau électroconducteur est noyé dans la feuille flexible.

10. Bloc-batterie selon la revendication 1, **caractérisé en ce que** le capteur de température est une thermistance.

11. Bloc-batterie selon la revendication 1, **caractérisé en ce qu'**il comprend en outre un ensemble logement (10), l'ensemble logement comprenant une base (12) et un couvercle supérieur (11), le couvercle supérieur étant relié à la base pour former un espace de réception fermé, le réceptacle à batteries étant localisé dans l'espace de réception et relié à la base.

12. Bloc-batterie selon la revendication 11, **caractérisé en ce que** le couvercle supérieur et la base sont reliés et fixés par soudage par ultrasons au niveau du bord où ils s'emboîtent.

13. Bloc-batterie selon la revendication 1, **caractérisé en ce que** le bloc-batterie comprend en outre :
une borne électrique (31) connectée électriquement à la carte de circuit ; et
une structure de loquet (50) capable d'engager de manière amovible le bloc-batterie avec un dispositif électrique et/ou un dispositif de charge, dans lequel, dans un état d'engagement, le dispositif électrique et/ou le dispositif de charge sont connectés électriquement à la borne électrique.
